Europäisches Patentamt

European Patent Office

Office européen des brevets

(19)

(11) Veröffentlichungsnummer: **0 215 400**
**A2**

(12) # EUROPÄISCHE PATENTANMELDUNG

(21) Anmeldenummer: 86112323.0

(51) Int. Cl.⁴: **B32B 27/32**

(22) Anmeldetag: 05.09.86

(30) Priorität: 14.09.85 DE 8526334 U

(43) Veröffentlichungstag der Anmeldung:
25.03.87 Patentblatt 87/13

(84) Benannte Vertragsstaaten:
BE DE FR GB IT NL

(71) Anmelder: HOECHST AKTIENGESELLSCHAFT
Postfach 80 03 20
D-6230 Frankfurt am Main 80(DE)

(72) Erfinder: Crass, Günther
Bachstrasse 7
D-6204 Taunusstein 4(DE)
Erfinder: Schmittel, Günter
303 Gilderbrook Rd.
Greenville S.C. 29615(US)

(54) **Wiederverschliessbarer Beutel mit Überklappe.**

(57) Es wird ein wiederverschließbarer Beutel mit Überklappe beschrieben, der aus einem einstückigen Folienzuschnitt geformt ist, welcher die beiden sich gegenüberliegenden Beutelwandungen und die Beutelüberklappe bildet. Dabei sind die Beutelwandungen durch Versiegelung ihrer beutelseitenrandnahen Bereiche gegeneinander fest miteinander verbunden. Die Siegelverbindung der beiden beutelseitenrandnahen Bereiche der Beutelüberklappe ist mit der Aussenseite der Beutelvorderwandung aufziehbar, und die Beutelüberklappe ist durch eine parallel zu ihrer Faltkante, im nahen Abstand zu dem freien Rand der Überklappe und von einer Ransiegelnaht zur anderen verlaufenden Haftklebenaht mit der Außenseite der Beutelvorderwandung verbunden. Der Folienzuschnitt besteht aus einer coextrudierten, biaxial streckorientierten und hitzefixierten, siegelfähigen, transparenten Dreischichtfolie, umfassend eine Basisschicht aus einem Propylenpolymeren, eine erste siegelfähige Oberflächenschicht mit niedriger Siegelanspringtemperatur, die im wesentlichen aus einem Copolymeren aus Propylen-und Ethylen-oder Buten-1-Einheiten und/oder einem Terpolymeren aus Ethylen-, Propylen-und Buten-1-Einheiten besteht, und eine zweite nicht siegelfähige Oberflächenschicht, die im wesentlichen aus einem Propylenhomopolymeren, enthaltend ein Gleitmittel und ein Antiblockmittel, besteht.

## Wiederverschließbarer Beutel mit Überklappe

Die vorliegende Erfindung bezieht sich auf einen wiederverschließbaren Beutel mit Überklappe, der aus einem einstückigen Folienzuschnitt geformt ist, welcher die beiden sich gegenüberliegenden Beutelwandungen und die Beutelüberklappe bildet, wobei die Beutelwandungen durch Versiegelung ihrer beutelseitenrandnahen Bereiche gegeneinander fest miteinander verbunden sind, wobei die Siegelverbindung der beiden beutelseitenrandnahen Bereiche der Beutelüberklappe mit der Außenseite der Beutelvorderwandung aufziehbar ist und wobei die Beutelüberklappe durch eine parallel zu ihrer Faltkante, im nahen Abstand zu dem freien Rand der Überklappe und von einer Randsiegelnaht zur anderen verlaufenden Haftklebenaht mit der Außenseite der Beutelvorderwandung verbunden ist.

Beutel der genannten Art sind bereits aus dem deutschen Gebrauchsmuster 81 23 305 bekannt. Die bekannten Beutel bestehen aus einem Laminat aus wenigstens einer ersten Lage aus streckorientierter Folie und wenigstens einer zweiten Lage aus siegelfähiger Folie, wobei die Verbindung jeweils aneinandergrenzender Lagen durch eine jeweils zwischen den betreffenden Lagen angeordnete Klebemittelschicht hervorgerufen wird; die Klebemittelschicht kann beispielsweise aus Klebemitteln auf Polyurethanbasis bestehen.

Die bekannten Beutel haben den Nachteil, daß die Herstellung des Folienlaminates durch Kaschierung aufwendig und damit teuer ist. Wenn die Kaschierung nicht äußerst präzise und gewissenhaft durchgeführt ist, führt dies bei den damit hergestellten Beuteln schnell zu Qualitätsverminderungen, weil sie für den bestimmungsgemäßen Einsatz nicht mehr in vollem Umfang geeignet sind.

Es bestand daher die Aufgabe, einen Beutel zu schaffen, der einfach herzustellen ist, weil insbesondere zu seiner Produktion keine off-line-Kaschierung des Laminatzuschnitts erforderlich ist, und der preiswerter zu produzieren ist, weil die Gefahr von qualitativ minderwertiger Ware bei der Fertigung stark herabgesetzt ist.

Gelöst wird diese Aufgabe durch einen Beutel der eingangs genannten Gattung, dessen kennzeichnendes Merkmal darin zu sehen ist, daß der Folienzuschnitt aus einer coextrudierten, biaxial streckorientierten und hitzefixierten, siegelfähigen, transparenten Dreischichtfolie besteht. Die Dreischichtfolie umfaßt dabei eine Basisschicht aus einem Propylenpolymeren, eine erste siegelfähige Oberflächenschicht mit niedriger Siegelanspringtemperatur, die im wesentlichen aus einem Copolymeren aus Propylen-und Ethylen-oder Buten-1-Einheiten und/oder einem Terpolymeren aus Ethylen-, Propylen-und Buten-1-Einheiten besteht, und eine zweite nicht siegelfähige Oberflächenschicht, die im wesentlichen aus einem Propylenhomopolymeren, enthaltend ein Gleitmittel und ein Antiblockmittel, besteht.

Das Propylenpolymere der Basisschicht der den erfindungs gemäßen Beutel bildenden Mehrschichtfolie ist ein für diesen Zweck übliches Polymeres, z.B. ein Homopolymer, insbesondere isotaktisches Polypropylen mit einem in n-Heptan löslichen Anteil von maximal 15 Gew.-%, oder ein Copolymer des Propylens mit Ethylen oder $C_4$-bis $C_8$-$\alpha$-Olefinen mit mindestens 90 Gew.-% Propylenanteil. Das Propylenpolymere der Basisschicht hat zweckmäßigerweise einen Schmelzflußindex von 0,5 bis 8, insbesondere 1,5 bis 4 g/10 min bei 230°C und 2,16 kp Belastung (DIN 53 735) und einen Schmelzpunkt von mindestens 140°C, vorzugsweise 150°C oder höher. Außer der Basisschicht ist auch die nichtsiegelfähige zweite Oberflächenschicht aus dem Propylenhomopolymer aufgebaut. Auch kann die siegelbare erste Oberflächenschicht Propylenhomopolymer als Zusatz enthalten. Die Basisschicht kann außer dem Propylenpolymeren noch ein antistatisches Mittel enthalten, wobei langkettige, aliphatische tertiäre Amine, deren aliphatischer Rest eine C-Kettenlänge von $C_{12}$ bis $C_{18}$ aufweist und die mit zwei Hydroxyalkyl-$(C_1$-$C_4)$-Gruppen substituiert sind, besonders geeignet sind. Diese antistatischen Mittel sind beispielsweise in der US-A-4,230,767 beschrieben. Ein Zusatz von 0,1 bis 0,4 Gew.-% ist ausreichend. Besonders bevorzugt sind N,N-Bis-(2-hydroxyethyl)-$(C_{12}$-$C_{18})$-alkyl-amine. Weitere Zusätze zur Verbesserung der Gleiteigenschaften wie Gleit-und Antiblockmittel in der Basisschicht ergeben praktisch keinen zusätzlichen Effekt hinsichtlich der Maschinengängigkeit der Mehrschichtfolie.

Die Siegelanspringtemperatur der ersten siegelfähigen Oberflächenschicht soll relativ niedrig sein und 100°C nicht überschreiten. Die Siegelanspringtemperatur ist die minimale Siegeltemperatur, bei der die Siegelnahtfestigkeit einen Wert von 0,5 N/15 mm Streifenbreite erreicht.

Ein geeignetes Polyolefinharz für eine solche siegelfähige Oberflächenschicht umfaßt ein Copolymeres aus Propylen-und Ethylen-oder Propylen-und Buten-1-Einheiten. Geeignete Copolymere aus Ethylen-und Propylen-Einheiten enthalten 3 bis 10 Gew.-% Ethylen-Einheiten, aus Propylen-und Buten-1-Einheiten 5 bis 40 Gew.-% Buten-1-Einheiten. Geeignete Polyolefinharze für die siegelfähige Oberflächenschicht umfassen auch Terpolymere aus Ethylen-, Propylen-und Buten-1-Einheiten mit einem Anteil von mindestens 80 Gew.-% Propylen-Einheiten. Der Schmelzpunkt der siegelfähigen Oberflächenschicht liegt bei 130°C oder höher, der Schmelzflußindex des Polyolefinharzes der siegelfähigen Oberflächenschicht liegt im Bereich von 1 bis 16 g/10 min bei 230°C und 2,16 kp Belastung (DIN 53 735).

Besonders vorteilhaft sind Gemische aus den genannten Copolymeren und Terpolymeren, insbesondere aus einem $C_3/C_4$-Copolymeren und einem $C_2/C_3/C_4$-Terpolymeren (Anspruch 3), wie es auch in der EP-A-0 114 312 beschrieben wird. Besonders bei Verwendung dieses speziellen Polymergemisches für die siegelfähige Oberflächenschicht hat sich überraschenderweise gezeigt, daß übliche Zusätze von Gleitmitteln (Polydiorganosiloxan) und/oder Antiblockmitteln (Silikate) in der siegelfähigen Schicht nicht erforderlich sind.

Zur Verbesserung der optischen Eigenschaften und Herabsetzung der Kratzempfindlichkeit der den erfindungsgemäßen Beutel bildenden Mehrschichtfolie ist es zweckmäßig, in der siegelfähigen Oberflächenschicht in an sich bekannter Weise 5 bis 15 Gew.-%, bezogen auf die siegelfähige Oberflächenschicht, eines niedrigmolekularen, mit dem siegelfähigen Polyolefinharz verträglichen thermoplastischen Harzes zu verwenden, das einen Erweichungspunkt von 60 bis 180°C, insbesondere 80 bis 130°C, (DIN 1995-U4) aufweist. Unter verträglichen Harzen sind solche Harze zu verstehen, die in der angegebenen Konzentration keine Trübung der Mehrschichtfolie bewirken. Als Beispiel für diese Harze sind zu nennen Kohlenwasserstoffharze, Ketonharze, Polyamidharze, Kolophonium, Dammarharze sowie chlorierte aliphatische und aromatische Kohlenwasserstoffharze. Der Zusatz dieser Harze zu einer polyolefinischen siegelfähigen Oberflächenschicht wird in der EP-A-0 114 312 beschrieben.

Eine weitere an sich bekannte (EP-A-0 114 312) Möglichkeit zur Verbesserung der optischen Eigenschaften und Kratzfestigkeit, aber auch der für die Beutelherstellung sehr wünschenswerten Maschinengängigkeit besteht in der Zugabe von 5 bis 15 Gew.-% eines Propylenhomopolymeren zu der siegelfähigen Oberflächenschicht. Geeignete Propylenhomopolymere sind die gleichen, wie sie oben auch für die Basisschicht beschrieben sind. Der Schmelzpunkt des Polypropylens liegt oberhalb des Schmelzpunkts des Polyolefinharzes der siegelfähigen Oberflächenschicht.

Die nichtsiegelfähige Oberflächenschicht besteht zum überwiegenden Teil aus einem Propylenhomopolymeren mit geringen Mengen von vorzugsweise Polydiorganosiloxan als Gleitmittel und Pigmenten als Antiblockmittel. Unverträgliche Harze, wie sie in der EP-B-0 027 586 als Antiblockmittel verwendet werden, oder Fettsäureamide als Gleitmittel haben zwar im Hinblick auf die Maschinengängigkeit eine ähnliche Wirkung, jedoch sind Polydiorganosiloxane und Pigmente vorzuziehen, da sie die optischen Eigenschaften der Folie und damit des daraus hergestellten Beutels nicht negativ beeinflussen.

Besonders geeignete Propylenhomopolymere wurden oben bei der Beschreibung der Basisschicht erläutert. Es ist jedoch aus Gründen der Coextrusionstechnik zweckmäßig, daß das Polypropylen der nichtsiegelfähigen Oberflächenschicht einen Schmelzflußindex aufweist, der höher ist als der Schmelzflußindex des Polypropylens der Basisschicht.

Das Polydiorganosiloxan wird in einer Menge von 0,3 bis 2,5 Gew.-%, bezogen auf die nichtsiegelfähige Oberflächenschicht, verwendet und ist vorzugsweise ein Polymethylphenylsiloxan oder Polydimethylsiloxan, insbesondere mit einer kinematischen Viskosität von $10^3$ bis $10^6$, insbesondere 20.000 bis 30.000 cSt. bei 25°C.

Die nichtsiegelfähige Oberflächenschicht enthält weiterhin 0,1 bis 1 Gew.-% eines anorganischen Pigments, vorzugsweise ein Silikat mit blattförmiger Struktur, welches sich bei der biaxialen Orientierung der Folie über wiegend parallel zur Folienebene ausrichtet. Besonders günstig sind blattförmige Silikate mit einem mittleren Teilchendurchmesser von 0,1 bis 1,0 $\mu$. Diese speziellen Silikate zeigen den Vorteil, daß die Kratzempfindlichkeit der Folie sich nicht erhöht und gleichzeitig das Gleitverhalten der Folie verbessert wird.

Die Dicke der Oberflächenschichten sollte weniger als 3$\mu$, insbesondere weniger als 1,5 $\mu$ betragen, da sich bei größeren Schichtdicken das Verarbeitungsverhalten bei der Beutelherstellung und -abfüllung verschlechtert. Die biaxial streckorientierte Mehrschichtfolie weist vorzugsweise eine Gesamtdicke von 10 bis 50$\mu$, insbesondere 15 bis 35$\mu$, auf.

Die Herstellung der im vorstehenden in allen Einzelheiten beschriebenen, den erfindungsgemäßen Beutel bildenden Dreischichtfolie geschieht bevorzugt nach dem Coextrusionsverfahren. Dabei werden die die einzelnen Schichten der Dreischichtfolie bildenden Polymeren in Plastifizierungsextrudern getrennt voneinander in -schmelzflüssigen Zustand gebracht, dann werden die einzelnen Schmelzen in einer Mehrschichtdüse oder nach der Adaptertechnologie zu einem Schmelzefilm vereinigt, und der vereinigte Schmelzefilm wird dann auf einer Kühlwalze abgeschreckt und bildet so die Vorfolie. Die Vorfolie wird daran anschließend in Längs-und Querrichtung gestreckt, um den Molekülketten die gewünschte Orientierung zu verleihen, die bewirkt, daß die Folie die gewünschte Festigkeit erhält. Nach der Streckorientierung wird die Folie zur Ver besserung ihrer Dimensionsstabilität noch hitzefixiert. Nach diesem üblichen Herstellungsverfahren schließt sich ein weiterer Behandlungsschritt an, durch den erreicht wird, daß eine Oberfläche, insbesondere die nichtsiegelfähige Oberflächenschicht der Dreischichtfolie, zur dauerhaften Aufnahme von Druckfarbe befähigt wird, um auf dem mit der Folie hergestellten Beutel eine das ästhetische Empfinden angenehm ansprechende, werbewirksame Bedruckung anbringen zu können. Hierzu wird auf der nichtsiegelfähigen Oberflächenschicht eine Coronaentladung mit üblicher Intensität durchgeführt. Hierbei werden elektrische Spannung und Stromstärke so eingestellt, wie sie erforderlich sind, um bei einer vergleichbaren Folie ohne Gleitmittelzusatz (Polysiloxanzusatz) eine Oberflächenspannung von 36 bis 40 mN/m zu erhalten, insbesondere wird die Coronabehandlung bei einer Spannung von 10 000 V und einer Frequenz von 10 000 Hz durchgeführt. Eine direkte Messung der Oberfächenspannung der Folie über ihre Benetzbarkeit mit Prüfflüssigkeiten (DIN 53 364) ist in Gegenwart von Polysiloxan nicht möglich.

Die coronabehandelte nichtsiegelfähige Oberflächenschicht nimmt einwandfrei Druckfarbe an. Die Druckfarbe haftet ausgezeichnet auf dieser Oberfläche, wobei sowohl Einkomponenten-als auch Zweikomponenten-Druckfarben geeignet sind.

Die coronabehandelte nichtsiegelfähige Oberflächenschicht kann weiterhin, um dem erfindungsgemäßen Beutel ein noch vorteilhafteres Aussehen zu verleihen, mit einem metalle nen Überzug versehen sein. Als metallener Überzug kommen insbesondere Schichten aus einem der Metalle Gold, Silber, Kupfer, Nickel, Zinn, Aluminium, aus Gemischen oder Legierungen dieser Metalle, bevorzugt aber aus Aluminium zum Einsatz. Üblicherweise besitzt der metallene Überzug eine Dicke im Bereich von 10 bis 100 nm; er wird bevorzugt durch Vakuumabscheidung aufgebracht.

Der Hohlraum des erfindungsgemäßen Beutels wird durch zwei jeweils gleich lange und praktisch gleich breite rechteckige Wandteile gebildet, die jeweils integraler Bestandteil des den Beutel insgesamt bildenden einstückigen dreischichtigen Folienzuschnitts sind. Die Innenseiten der Beutelwandungen werden jeweils durch die siegelfähige Oberflächenschicht gebildet, während auf der Außenseite der Beutelwandungen die nichtsiegelfähige Oberflächenschicht angeordnet ist. Im Bereich der sich gegenüberliegenden Beutelseitenränder sind die jeweils mit ihren siegelfähigen Oberflächenschichten aneinandergrenzenden Beutelwandungen fest miteinander versiegelt.

Die beiden Beutelwandungen gehen im Bereich des Beutelbodens in Form einer Faltkante, die als Beutelbodenfaltkante bezeichnet wird, integral ineinander über. Die Beutelbodenfaltkante liegt der Beutelöffnung gegenüber. An die der Beutelbodenfaltkante gegenüberliegende obere Begrenzungskante der einen Beutelwand schließt sich integral die Beutelüberklappe an. Diejenige Beutelwand, an deren oberem Ende sich die Beutelüberklappe anschließt, wird definitionsgemäß als Beutelrückwand, die andere Beutel wand, die an ihrem der Beutelbodenfaltkante entgegengesetzten Ende durch einen freien Rand begrenzt ist, als Beutelvorderwand bezeichnet. Der linienförmige Bereich, in welchem die Beutelrückwand integral in die Beutelüberklappe übergeht, wird als Überklappenfaltkante des Beutels bezeichnet; die Längsachse der Überklappenfaltkante verläuft parallel zur Beutelbodenfaltkante; der Abstand beider Kanten entspricht der Länge des Beutels.

Die Beutelüberklappe überdeckt in geschlossenem Zustand des Beutels die Mündungsöffnung seines Hohlraumes. Der freie Rand der Beutelvorderwand verläuft in geschlossenem Zustand des Beutels, vorzugsweise nahe der Innenseite der Beutelüberklappenfaltkante. Das freie Ende der Beutelüberklappe wird durch einen vorzugsweise geraden Rand begrenzt, der parallel zur Beutelüberklappenfaltkante verläuft.

Die Beutelüberklappe grenzt mit ihrer Innenseite, die durch die siegelfähige Oberflächenschicht der Dreischichtfoilie gebildet wird, unmittelbar an die nichtsiegelfähige Oberflächenschicht der Außenseite der Beutelvorderwand an. Die Länge der Beutelüberklappe ist insbesondere derart bemessen, daß der Abstand ihres freien Randes zur Beutelbondenfaltkante geringer ist als der Abstand ihres freien Randes zur Überklappenfaltkante.

Jeweils im Bereich ihrer Seitenränder ist die Innenseite der Beutelüberklappe mit der nichtsiegelfähigen Oberflächenschicht der Außenseite der Beutelvorderwand durch Siegelung verbunden; diese Siegelung ist ruckfrei aufziehbar.

Die Kanten der Seitenränder der Beutelüberklappen fluchten jeweils mit den Beutelseitenkanten.

Die Beutelüberklappe ist ferner im Bereich einer streifenförmigen, bevorzugt geraden Zone, die im Vergleich zur Länge der Überklappe schmal ist und die sich von einer Beutelüberklappenseitenrandsiegelnaht zur anderen erstreckt, mit der nichtsiegelfähigen Oberflächenschicht der Außenseite der Beutelvorderwand durch Siegelung verbunden; auch diese Siegelung ist ruckfrei aufziehbar. Die bezeichnete ruckfrei aufziehbare Siegelnaht verläuft vorteilhaft parallel und im Abstand zur Überklappenfaltkante.

Durch die besagte zusätzliche, von einer Beutelüberklappenseitenrandsiegelnaht zur anderen verlaufende Siegelung wird bewirkt, daß der erfindungsgemäße Beutel in mit Packgut befülltem Zustand zunächst die für den Transport, die Lagerung und den anschließenden Verkauf erforderliche durch Siegelung bewirkte hohe Dichtigkeit besitzt.

Die Beutelüberklappe ist darüber hinaus im Bereich einer streifenförmigen, bevorzugt geraden · Klebezone, die schmal im Vergleich zur Breite der Überklappe ist und die sich parallel zum freien Rand derselben und im nahen Abstand zu dieser erskrecht, mit der Außenseite der Beutelvorderwand verklebt. Die Klebezone wird beispielsweise durch eine Schicht auf Acrylat-oder Neoprenbasis gebildet. Die genannte Zone wird auch als Haftkleberzone bezeichnet.

Die Haftkleberzone kann alternativ dazu beispielsweise auch aus einem doppelseitigen Haftklebeband bestehen, das mit siener einen Oberfläche an die Außenseite der Beutelvorderwand und mit seiner anderen Oberfläche an die Innenseite der Beutelüberklappe angrenzt.

Das bestimmungsgemäße Öffnen und Wiederverschließen des erfindungsgemäßen Beutels wird von dem Verbraucher wie folgt vorgenommen:

Durch Hochziehen der freien Grifflasche der Beutelüberklappe wird diese von der Außenseite der Behältervorderwand unter ruckfreiem Aufziehen der Siegelnähte, die die Beutelüberklappe mit der Außenseite der Außenvorderwand verbinden, und unter Aufziehen der Haftkleberzone zwischen Beutelüberklappe und Außenseite der Beutelvorderwand gelöst, so daß die Beutelöffnung zugänglich wird. Nach teilweiser Entnahme von Füllgut aus dem Beutelhohlraum kann der Beutel zur sicheren Aufbewahrung des im Beutelhohlraum verbliebenen Teils des Füllgutes wieder derart verschlossen werden, daß das Füllgut aus diesem nicht herausfallen kann.

Hierzu wird die Beutelüberklappe wieder in ihre ursprüngliche Lage geklappt, bei der ihre Innenseite an die Aussenseite der Beutelvorderwand angrenzt un die Beutelüberklappe wird von Hand mit leichtem Druck gegen ihre Unterlage gepreßt; dadurch wird die selbstklebende Zone wieder wirksam, und die Überklappe haftet durch erneute Verklebung wieder an der Beutelwand.

Danach kann die Beutelüberklappe beliebig oft geöffnet und wiederverschlossen werden.

Die Siegelungen des erfindungsgemäßen Beutels werden in bekannter Weise mittels ebenfalls bekannter Vorrichtungen, beispielsweise mit Hilfe beheizter oder zumindest beheizbarer Siegelbacken, vorgenommen.

Im nachfolgenden soll die Erfindung beispielhaft anhand einer zwei Figuren umfassenden Zeichnung näher erläutert werden:

Die Figur 1 zeigt in schräger Draufsicht die Vorderseite eines erfindungsgemäßen Beutels.

In Figur 2 ist ein erfindungsgemäßer Beutel nach Figur 1 im Querschnitt dargestellt.

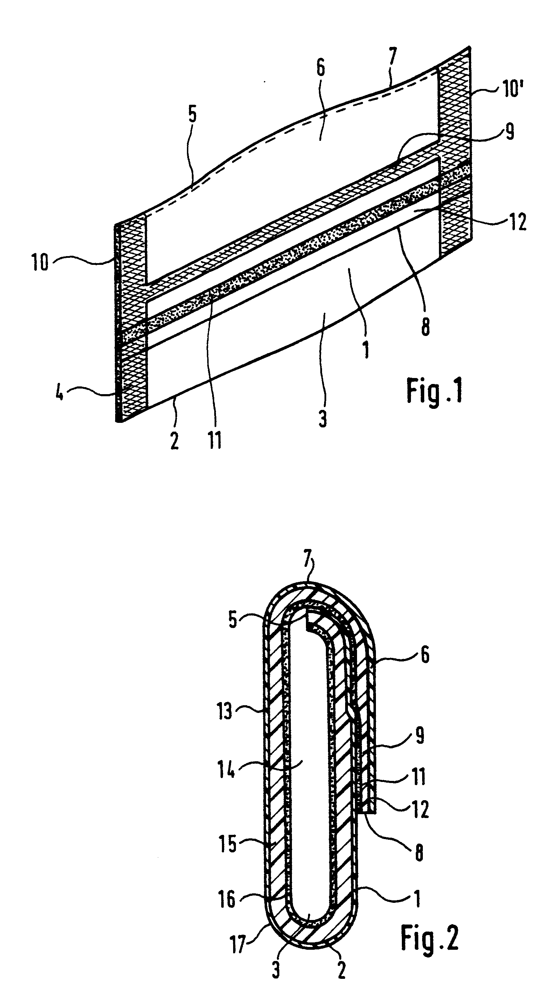

Durch die einzelnen Bezugszeichen ist in Figur 1 die Beutelvorderwand 1 und die Beutelbodenfaltkante 2 hervorgehoben. Ferner sind der Beutelboden 3, die Beutelseitenrandsiegelnaht 4, der freie Rand 5 der Beutelvorderwand 1 und die Beutelüberklappe 6 deutlich erkennbar. Im Bereich der Beutelüberklappenfaltkante 7 geht die Beutelüberklappe 6 integral in die in Figur 1 nicht sichbare Beutelrückwand über. An der Beutelüberklappe 6 ist der freie Rand 8 der Beutelüberklappe 6 erkennbar sowie die aufziehbare Beutelüberklappenlängssiegelnaht 9 sowie die jeweils im Bereich der Beutelseitenrandsiegelnaht 4 angeordneten, ebenfalls aufziehbaren Beutelüberklappenseitenrandseigelnähte 10/10'. Ferner ist dargestellt die wie derholbar durch Aufziehen trennbare und wiederholbar wiederverbinbare Haftkleberzone 11 sowie die frei zugängliche Zuglasche 12 der Beutelüberklappe 6.

In Figur 2 ist der Schichtaufbau der den erfindungsgemäßen Beutel bildenden Dreischichtfolie deutlicher dargestellt. Im einzelnen haben die Bezugszeichen 1 bis 3, 5 bis 9 sowie 11 und 12 die gleiche Bedeutung wie in Figur 1. Darüber hinaus ist in Figur 2 zusätzlich die Beutelrückwand 13 erkennbar und der Beutelhohlraum 14. Die den Beutel bildende Dreischichtfolie besteht aus der Basisschicht 15, auf deren die Beutelinnenseite bildender Oberfläche die siegelbare Oberflächenschicht 16 erkennbar ist und auf deren die Beutelaußenseite bildender Oberfläche die nichtsiegelbare Oberflächenschicht 17 angeordnet ist.

## Ansprüche

1. Wiederverschließbarer Beutel mit Überklappe, der aus einem einstückigen Folienzuschnitt geformt ist, welcher die beiden sich gegenüberliegenden Beutelwandungen und die Beutelüberklappe bildet, wobei die Beutelwandungen durch Versiegelung ihrer beutelseitenrandnahen Bereiche gegeneinander fest miteinander verbunden sind, wobei die Siegelverbindung der beiden beutelseitenrandnahen Bereiche der Beutelüberklappe mit der Außenseite der Beutelvorderwandung aufziehbar ist und wobei die Beutelüberklappe durch eine parallel zu ihrer Faltkante, im nahen Abstand zu dem freien Rand der Überklappe und von einer Randseigelnaht zur anderen verlaufenden Haftklebenaht mit der Außenseite der Beutelvorderwandung verbunden ist, dadurch gekennzeichnet, daß der Folienzuschnitt aus einer coextrudierten, biaxial streckorientierten und hitzefixierten, siegelfähigen, transparenten Dreischichtfolie besteht, umfassend eine Basisschicht aus einem Propylenpolymeren, eine erste sigelfähige Oberflächenschicht mit niedriger Siegelanspringtemperatur, die im wesentlichen aus einem Copolymeren aus Propylen-und Ethylen- oder Buten-1-Einheiten und/oder einem Terpolymeren aus Ethylen-, Propylen-und Buten-1-Einheiten besteht, und eine zweite nicht siegelfähige Oberflächenschicht, die im wesentlichen aus einem Propylenhomopolymeren, enthaltend ein Gleitmittel und ein Antiblockmittel, besteht.

2. Beutel nach Anspruch 1, dadurch gekennzeichnet, daß die zweite nicht siegelfähige Oberflächenschicht in Kom bination die folgenden Komponenten enthält:

a) 96,5 bis 99,6 Gew.-% eines Propylenhomopolymeren,

b) 0,3 bis 2,5 Gew.-% eines Gleitmittels, vorzurgsweise eines Polydiorganosiloxans, insbesondere Polydialkylsiloxans oder Polyalkylphenylsiloxans,

c) 0,1 bis 1 Gew.-% eines Antiblockmittels, vorzugsweise anorganischen Pigments, insbesondere Silikats, jeweils bezogen auf das Gesamtgewicht der nichtsiegelfähigen Oberflächenschicht.

3. Beutel nach Anspruch 1 oder 2, dadurch gekennzeichnet, daß die erste siegelfähige Oberflächenschicht als Additive

a) 5 bis 15 Gew.-% eines niedrigmolekularen, mit der Olefinharzzusammensetzung der siegelfähigen Oberflächenschicht verträglichen Garzen und/oder

b) 5 bis 15 Gew.-% eines Propylenhomopolymeren, jeweils bezogen auf die siegelbare Oberflächenschicht, enthält.

4. Beutel nach einem der Ansprüche 1 bis 3, dadurch gekennzeichnet, daß die erste siegelfähige Oberflächenschicht aus einem Ethylen-Propylen-Buten-1-Terpolymeren und einem Propylen-Buten-1-Copolymeren entsprechend einem Gehalt von 0,1 bis 7 Gew.-% Ethylen, 53 bis 89,9 Gew.-% Propylen und 10 bis 40 Gew.-% Buten-1, bezogen auf das Gesamtgewicht der Olefinharzzusammensetzung, besteht.

5. Beutel nach einem der Ansprüche 1 bis 4, dadurch gekennzeichnet, daß das anorganische Pigment der zweiten nichtsiegelfähigen Oberflächenschicht ein blättchenför miges Silikat ist, vorzugsweise mit einem mittleren Teilchendurchmesser von 0,1 bis 3 $\mu$m, insbesondere 0,2 bis 1,5 $\mu$m.

6. Beutel nach einem der Ansprüche 1 bis 5, dadurch gekennzeichnet, daß das Polydiorganosiloxan ein Polydimethylsiloxan oder Polymethylphenylsiloxan ist, vorzugsweise mit einer kinematischen Viskosität von $10^3$ bis $10^6$, insbesondere 20.000 bis 30.000 cSt. (25°C).

7. Beutel nach einem der Ansprüche 1 bis 6, dadurch gekennzeichnet, daß die zweite nichtsiegelfähige Oberflächenschicht zur Verbesserung ihrer Bedruckbarkeit coronabehandelt ist.

Fig.1

Fig.2

HOECHST AKTIENGESELLSCHAFT
85/K 059